# EUROPÄISCHE PATENTSCHRIFT

(11) **EP 0 676 906 B1**
(45) Veröffentlichungstag und Bekanntmachung des Hinweises auf die Patenterteilung: **13.11.2002**
(21) Anmeldenummer: 95810239.4
(22) Anmeldetag: 10.04.1995
(51) Int. Cl.: H04Q 7/24

(54) **Verfahren zur Übertragung von Sprach- und Servicesignalen und Kommunikationssystem**
System and method for the transmission of voice and service signals
Système et méthode pour la transmission de signaux de parole et de service

(30) Priorität: 11.04.1994 CH 106194; 25.05.1994 CH 162194
(43) Veröffentlichungstag der Anmeldung: 11.10.1995
(73) Patentinhaber: Siemens Schweiz AG, 8047 Zürich (CH)
(72) Erfinder: Lietha,Peter, CH-5525 Fischbach (CH); Rüegg,Walter, CH-8913 Ottenbach (CH)
(74) Vertreter: Berg, Peter, Dipl.-Ing.

(56) Entgegenhaltungen:
- EP-A- 0 408 024
- WO-A-92/17013
- PATENT ABSTRACTS OF JAPAN vol. 15, no. 319 (E-1100) 14. August 1991 & JP-A-03 117 064 (AIPHONE CO LTD) 17. Mai 1991

## Beschreibung

Die vorliegende Erfindung betrifft ein Verfahren nach dem Oberbegriff des Patentanspruchs 1 sowie ein insbesondere für Flugsicherungsdienste einsetzbares Kommunikationssystem nach dem Oberbegriff des Anspruchs 5.

Zur Überwachung des Verkehrs, insbesondere des Luftverkehrs werden Funknetze eingesetzt, über die der Verkehrsleiter mit den Verkehrsteilnehmern in Kontakt treten kann. Der Verkehrsleiter hat im Normalfall auch Zugang zum öffentlichen Telefonnetz. Für den Zugang zu den erwähnten Netzen standen dem Verkehrsleiter meistens zwei von einander vollständig getrennte Endgeräte zur Verfügung. Eine Durchschaltung eines über das öffentliche Telefonnetz ankommenden Gesprächs zu einem Teilnehmer des Funknetzes war daher nicht möglich. Aus der EP 0 507 684 A1 ist ein Kommunikationssystem bekannt, über das Fluglotsen einerseits mittels Funkverbindungen Kontakt mit Piloten überwachter Flugzeuge und andererseits über eine Teilnehmervermittlungsanlage Kontakt mit Teilnehmern des öffentlichen oder eines lokalen Telefonnetzes aufnehmen können. Dieses System befähigt den Verkehrsleiter über ein einziges Endgerät (Schaltpult/Sonderendgerät) Kontakt mit dem Funk- und dem Telefonnetz aufzunehmen. Eine Durchschaltung eines über das öffentliche Telefonnetz ankommenden Gesprächs zu einem Teilnehmer des Funknetzes (oder umgekehrt) ist jedoch auch bei diesem System nicht vorgesehen. Ferner sind bei diesem System besondere Massnahmen zur Übertragung von Sprach- und Servicesignalen zwischen zwei Schnittstellen über eine einzelne Busleitung vorgesehen. Dabei werden Sprach-, Service- und Identifikationssignale ineinander verschachtelt und sequentiell übertragen. Als periphere Geräte, die je über eine spezielle Schnittstelle und eine Busleitung mit dem Sonderendgerät des Verkehrsleiters verbunden sind, sind ein Sender, eine Teilnehmervermittlungsanlage, ein Telefonendgerät und eine Kontrollkonsole vorgesehen. Das System ist daher sehr aufwendig konzipiert, da alle Kommunikationsaufgaben durch systemspezifische Komponenten wahrzunehmen sind. Diese Konzeptionsweise führt zu einer geringen Flexibilität des Gesamtsystems. Erweiterungen des Systems bezüglich Kapazität, zusätzlichen Leistungsmerkmalen und Funktionalität sind daher jeweils mit einem grossen Entwicklungsaufwand verbunden. Beispielsweise zeugt das aufwendige Verfahren, das zur Datenübertragung von ineinander verschachtelten Sprach- und Servicesignalen über einen zentralen Datenbus dient, vom hohen Spezifikationsgrad dieses Systems.

Der vorliegenden Erfindung liegt daher die Aufgabe zugrunde, ein Verfahren und ein Kommunikationssystem zu dessen Durchführung zu schaffen, durch die eine effiziente Übertragung von Sprachund Servicesignalen ermöglicht wird. Ferner soll das Kommunikationssystem einfach und kostengünstig aufgebaut sein und einen grösstmöglichen Flexibilitätsgrad aufweisen. Durch das Verfahren sollen zudem immer optimale Kommunikationsverhältnisse geschaffen werden.

Diese Aufgabe wird durch die im kennzeichnenden Teil des Patentanspruchs 1 bzw. 5 angegebenen Massnahmen gelöst. Vorteilhafte Ausgestaltungen der Erfindung sind in weiteren Ansprüchen angegeben.

Das erfindungsgemässe Kommunikationssystem kann durch den bzw. die Verkehrsleiter einfach bedient werden. Kommunikationsverbindungen mit maximaler Qualität lassen sich schnell aufbauen. Der kostengünstige Aufbau des Systems ergibt sich durch die Verwendung von weitgehend standardisierten Komponenten. Femer wird von Resourcen Gebrauch gemacht, die in Verkehrszentralen bereits vorhanden sind und die nur teilweise und nach Bedarf durch das erfindungsgemässe Kommunikationssystem in Anspruch genommen werden. Das erfindungsgemässe Verfahren erlaubt femer die effiziente Datenübertragung in diesem flexiblen Kommunikationssystem.

Die Erfindung wird nachfolgend anhand einer Zeichnung beispielsweise näher erläutert. Dabei zeigt:
- Fig. 1: die leitzentralenseitige Struktur des Kommunikationssystems mit der Teilnehmervermittlungsanlage und
- Fig. 2: das Kommunikationssystem mit den wesentlichsten Kommunikationsverbindungen.

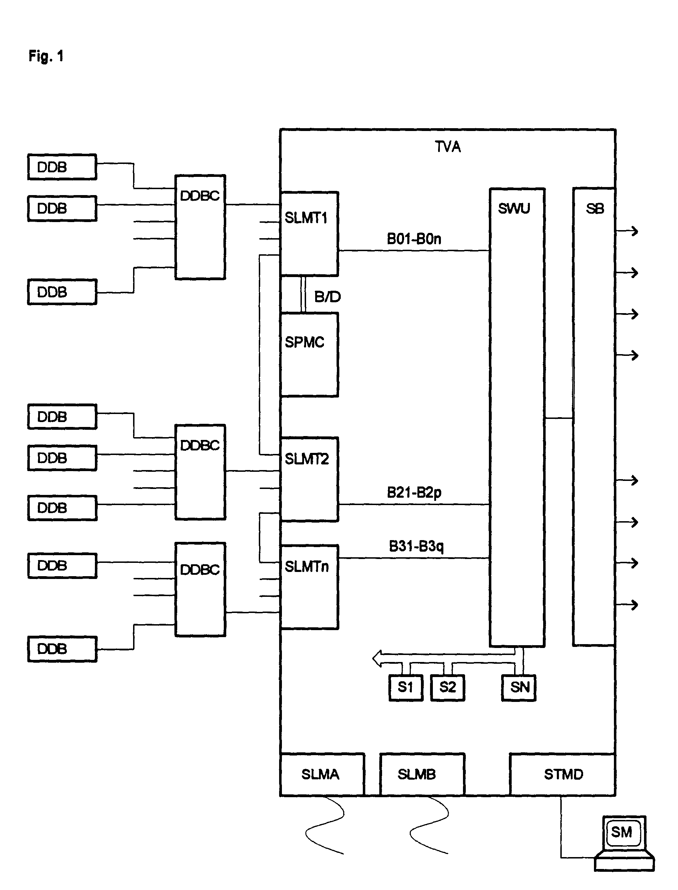

Fig. 1 zeigt das erfindungsgemässe Kommunikationssystem, dessen zentrales Element eine nach der ISDN-Technik arbeitende Teilnehmervermittlungsanlage TVA ist, die als Netzknoten für zumindest ein Funk- und ein Telefonnetz dient. An die in den Knotenpunkten der lokalen Netze gelegenen, oft auch als Nebenstellenanlagen bezeichneten Teilnehmervermittlungsanlagen können bis zu mehrere tausend Teilnehmer angeschlossen werden. Eine Schnittstelle zu den öffentlichen Kommunikationsnetzen erlaubt darüber hinaus die Kommunikation mit externen Partnern.

In öffentlichen Kommunikationsnetzen ist die Realisierung dieser auf ISDN (Integrated Service Digital Network) basierenden Konzepte noch im Umbruch begriffen, während die Integration der Dienste in privaten Unternehmen schon weit fortgeschritten ist. Aus der Druckschrift "ISDN im Büro", erschienen im Dezember 1985 als Sonderausgabe zu den monatlichen Publikationen "Telecom Report" und "Siemens-Magazin COM" der Firma Siemens, sind digitale Teilnehmervermittlungsanlagen bekannt, die eine flexible Anpassung an moderne Organisationsformen erlauben. Dies geschieht unter anderem durch die Integration von sogenannten Servern, d.h. Hardware-Modulen, die mittels Systemprozeduren spezielle Services - Leistungsmerkmale im Kommunikationssystem - bereitstellen.

Obwohl die in der oben dieser Druckschrift erläuterten digitalen Teilnehmervermittlungsanlagen eine Vielzahl von Leistungsmerkmalen bereitstellen, erfüllen sie natürlich nicht alle Anforderungen, die gestellt werden, falls spezielle Anwendungen zu realisieren sind. Wesentlich für die Erfindung ist die Erweiterung des digitalen Kommunikationssystems durch anwendungsspezifische vermittlungstechnische Server. Sie werden als sogenannte Servermodule in der Peripherie des Kommunikationssystems anstelle eines oder mehrerer üblicher digitaler Schnittstellenmodule installiert. Damit steht dem Anwender der volle Leistungsumfang des digitalen Kommunikationssystems verbunden mit den zusätzlichen Leistungsmerkmalen der vermittlungstechnischen Server zur Verfügung. Insbesondere die Verlagerung der vermittlungstechnischen Server in die Peripherie des Kommunikationssystems bietet erhebliche Vorteile, wie z.B. die Möglichkeit, bei Bedarf flexibel neue Leistungsmerkmale bereitzustellen, ohne dabei in zentralen Teilen des Kommunikationssystems umfangreiche Eingriffe vornehmen und damit eventuell das gesamte System abschalten zu müssen. Zum anderen ist die Verwendung der vermittlungstechnischen Server anstelle anderer Schnittstellenmodule mit einer drastischen Reduzierung des Verkabelungsaufwandes und damit einer Minimierung der Fehlerwahrscheinlichkeit verbunden.

Mit vermittlungstechnischen Servem und Sonderendgeräten versehene Teilnehmervermittlungsanlagen, die für die Bürokommunikation vorgesehen sind, sind z.B. aus der Veröffentlichungsschrift WO 92/17013 bekannt. Die darin erläuterten Teilnehmervermittlungsanlagen sowie die zur Steuerung und Inbetriebsetzung der Sonderendgeräte vorgesehenen Abläufe sind grundsätzlich mit denjenigen des erfindungsgemässen Kommunikationssystems austauschbar. Die in Fig. 1 gezeigte Teilnehmervermittlungsanlage TVA, an die über Schnittstellenbaugruppen SLMA, SLMB herkömmliche Endgeräte sowie über Steuerbaugruppen SLMT und Konzentratorbaugruppen DDBC Sonderendgeräte DDB angeschlossen sind, ist über eine Schnittstellenbaugruppe SB mit öffentlichen und/oder privaten Kommunikationssystemen, öffentlichen, privaten oder sachspezifischen (z. B. Verkehrsnetz, Eurocontrolnetz, etc.) Netzen und/oder direkt mit Endgeräten verbunden bzw. verbindbar. Zur Gewährleistung von sicheren und möglichst störungsfreien Verbindungen werden oft auch Stand- oder Mietleitungen verwendet. Zentraler Bestandteil des Teilnehmervermittlungsanlage TVA ist eine Durchschalteeinheit SWU, in der alle der Durchschaltung von Verbindungen dienenden zentralen Einheiten sowie eine hierzu erforderliche zentrale Steuerung integriert ist. Die Durchschalteeinheit SWU ist ferner mit den Peripheriemodulen SLMA und SLMB, mit einer Schnittstelleneinheit STMD sowie mit der Schnittstellenbaugruppe SB verbunden. Die Teilnehmervermittlungsanlage TVA ist ISDN-systemgerecht in die weiteren Kommunikationsnetze eingebunden; die Schnittstelleneinheit SB muss diese Einbindung durch Bereitstellung spezieller Datenformate sicherstellen. Des weiteren ist die Durchschalteeinheit SWU mit integrierten Servern S1 ... Sn über zentrale Bussysteme verbunden. Die mit der Durchschalteeinheit SWU verbundenen Peripheriemodule SLMA und SLMB dienen der Bereitsstellung der in der Vermittlungstechnik allgemein bekannten BORSCHT-Funktionen für die herkömmlichen analogen bzw. digitalen Teilnehmerendgeräte. Die Schnittstelleneinheit STMD führt Anpassungen, z.B. bei notwendigen Konfigurationsänderungen, zwischen dem Kommunikationssystem KS und der externen Speichereinheit SM durch.

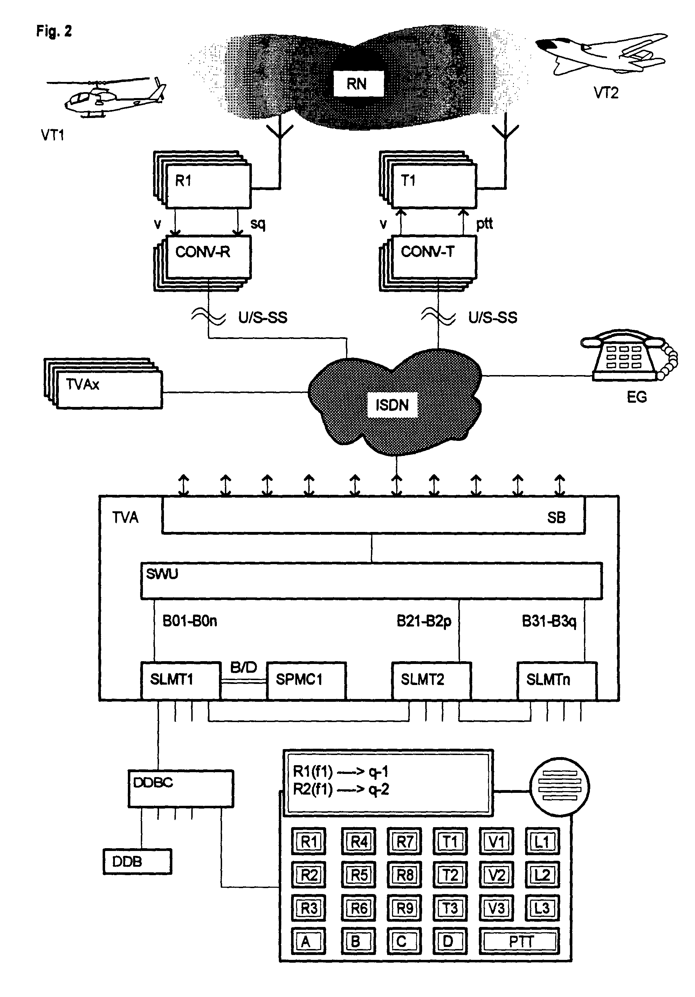

Die vermittlungstechnischen Server sind als Sonderperipheriemodule, im folgenden Steuereinheiten SLMT genannt, realisiert. Sie werden dezentral in das Kommunikationssystem KS eingebunden, indem sie anstelle der Peripheriemodule SLMB eingefügt werden. Die systemkonforme Einbindung erfordert umfangreiche Anpassungsmassnahmen an den betreffenden Hard- und Software-Schnittstellen, worauf später noch eingegangen wird. Vorzugsweise werden, bei höherem Ausbaugrad des Kommunikationssystems, die vermittlungstechnischen Server in Systemgruppen geordnet. Eine vermittlungstechnische Steuereinheit SLMT wird dabei vorzugsweise einer zentralen mit bis zu vier vermittlungstechnischen Steuereinheiten SLMT versehenen Systemgruppe zugeordnet. Ausgangsseitig sind die Steuereinheiten SLMT1, SLMT2 über Konzentratorbaugruppen DDBC mit den Sonderendgeräten DDB vorzugsweise mittels Lichtwellenleitem verbunden. Die Konzentratorbaugruppen DDBC sind dazu mit Multiplexeigenschaften ausgestattet, um die von mehreren Sonderendgeräten DDB ankommenden Signale zu den Steuereinheiten SLMT1, SLMT2 zu schalten. Als Übertragungsverfahren wird normalerweise ein PCM (Puls Code Modulation) - Verfahren verwendet. Sonderendgeräte DDB können entweder für den Arbeitsplatz des Verkehrsleiters (oder Fluglotsen) konzipierte tasten- oder bildschirm-orientierte Endgeräte sein, die Handapparate, Mikrofone und/oder Lautsprecher aufweisen. Das Ansteuern der Sonderendgeräte DDB erfolgt über die Steuereinheiten SLMT unter Verwendung von Steuerprozeduren BS, BT, VT, ST, DB. Für die erfindungsgemässe Anwendung ist zusätzlich mindestens eine Überwachungsschaltung SPMC vorgesehen, die mit mindestens einer Steuereinheit SLMT und über eine Standard-Schnittstelle SS mit der Teilnehmervermittlungsanlage TVA verbunden ist. Auf die Funktionen der Überwachungsschaltung SPMC wird im Zusammenhang mit den Erläuterungen zu Fig. 2 noch näher eingegangen. Normalerweise wird für alle Steuereinheiten SLMT1, ..., SLMTn nur eine einzige Überwachungsschaltung SPMC benötigt.

Generell sind die auf den Steuereinheiten SLMT ablaufenden Prozeduren organisatorisch in entsprechenden Komplexen auf den Steuereinheiten SLMT abgelegt. Die gesamte die Steuereinheiten SLMT betreffende Software unterscheidet dabei Prozeduren
- des Betriebssystems BS
- der Betriebstechnik BT
- der Vermittlungstechnik VT
- der Sicherheitstechnik ST
- sowie der Datenbank DB.

Während die Prozeduren des Betriebssystems BS die vorhandenen Systemkomponenten steuern, übernehmen die Prozeduren der Betriebstechnik BT Steueraufgaben im Bereich
- der Zeitsynchronisation zu den restlichen Einheiten der Teilnehmervermittlungsanlage TVA
- sowie der Systemzuverlässigkeit.

Der störungsfreie Betrieb jeder Steuereinheit SLMT wird von der Sicherheitstechnik ST sichergestellt. Diese sorgt insbesondere dafür, dass auftretende Fehler sofort analysiert und bei Bedarf entsprechende Reaktionen von Seiten des Systems ausgelöst werden.

Die Prozeduren des vermittlungstechnischen Funktionsblocks VT der Steuereinheiten SLMT bearbeiten die eigentlichen anwendungsspezifischen Leistungsmerkmale. Leistungsmerkmale sind zum Beispiel
- Sprachüberwachung,
- Makeln,
- Parallelruf-,
- Konferenzgesprächs-
- sowie Mithör- und Mitschreibfunktionen,
worauf unten noch näher eingegangen wird. Insbesondere führen die Prozeduren des vermittlungstechnischen Funktionsblocks VT der Steuereinheiten SLMT die Umsetzung der von den Sonderendgeräten DDB ankommenden Datenformate in die Datenformate der Teilnehmervermittlungsanlage TVA durch.

Des weiteren ist auf den Steuereinheiten SLMT je eine Datenbank DB abgelegt, in welcher statische und dynamische Konfigurationsdaten der Sonderendgeräte DDB sowie der Steuereinheiten SLMT selbst verwaltet werden. Die statischen Konfigurationsdaten geben Auskunft über die Bestückung der Sonderendgeräte DDB mit Handapparaten und Lautsprechern, während die dynamischen Konfigurationsdaten Informationen über momentane Belegungszustände der Handapparate sowie der angeschlossenen Leitungen vermitteln. Somit hat jede der Steuereinheiten SLMT1, ..., SLMTn ein vollständiges Abbild der gesamten Konfiguration aller Steuereinheiten SLMT. Eine eventuelle Änderung des Konfigurationszustandes einer der Steuereinheiten SLMT, der Überwachungsschaltung SPMC oder eines der Sonderendgeräte DDB wird umgehend allen Steuereinheiten SLMT mitgeteilt. Mit diesem Konzept ist eine Dezentralisierung dynamischer Konfigurationsdaten verbunden. Dies bedeutet, dass z.B. bei der Erstellung neuer Leistungsmerkmale allfällige Änderungen ohne grossen Aufwand auf den Steuereinheiten SLMT durchgeführt werden können, ohne dabei zentral in die Prozeduren der Teilnehmervermittlungsanlage TVA eingreifen zu müssen.

Ferner sind an die Teilnehmervermittlungsanlage TVA über die Schnittstelleneinheit STMD externe Speichereinheiten mit Datensichtgerät - im folgenden System Manager SM genannt - angeschlossen, die Konfigurationsdaten für die Steuereinheiten SLMT und die Sonderendgeräte DDB enthalten. Die Verlagerung der Konfigurationsdaten zu externen Einheiten kommt insbesondere dann zum Tragen, wenn die Teilnehmervermittlungsanlage TVA für Wartungsarbeiten abgeschaltet werden muss. In diesem Fall werden beim Hochlauf der Teilnehmervermittlungsanlage TVA die Steuereinheiten SLMT sowie die Sonderendgeräte DDB mit den Konfigurationsdaten vom System Manager SM geladen, womit der ursprüngliche Zustand in kurzer Zeit wiederhergestellt ist.

Aus diesem Konzept resultieren Leistungsmerkmale, die den speziellen Bedürfnissen eines Arbeitsplatzes Rechnung tragen. Insbesondere das Leistungsmerkmal "Sprachüberwachung", durch das mehrere Gespräche z.B. über einen Konferenzbaustein auf einen Lautsprecher geschaltet werden können, ist dabei von besonderer Bedeutung.

Fig. 2 zeigt ein Sonderendgerät DDB, das über eine Konzentratorbaugruppe DDBC mit der Steuerbaugruppe SLMT1 der Teilnehmervermittlungsanlage TVA verbunden ist. Die Steuerbaugruppe SLMT1 ist zusätzlich mit einer Überwachungsschaltung SPMC verbunden, die als Sonderperipheriemodul mit einer Standardschnittstelle (z.B. eine für eine SLMB-Baugruppe konzipierte Schnittstelle) der Teilnehmervermittlungsanlage TVA verbunden ist. Die Steuerbaugruppe SLMT und die Überwachungsschaltung SPMC sind dabei über Leitungen BD miteinander verbunden, über die Servicedaten in einen dem Sonderendgerät DDB zugeführten D-Kanal abgebbar sind. Über die Schnittstellenbaugruppe SB und ISDN-kompatible Netze oder Standleitungen sowie dem Fachmann bekannte Schnittstellen (U- oder S-Schnittstellen U/S-SS) ist die Teilnehmervermittlungsanlage TVA mit Umsetzem CONV-R, CONV-T verbunden, die über je zwei Leitungen v, sq; v, ptt mit einer Empfangs- bzw. einer Sendeeinheit R1; T1 verbunden sind. Über die Empfangs- und die Sendeeinheit R1, T1 und über ein Funknetz RN können daher Funkverbindungen zu Verkehrsteilnehmern VT1, VT2, ..., VTx erstellt werden, die mittels der Teilnehmervermittlungsanlage TVA zu den Sonderendgeräten DDB durchgeschaltet werden können. Normalerweise werden dazu Gruppen von Empfängern R verwendet, denen je eine Frequenz zugeordnet ist. Z.B. könnte den Empfängern R1, R2 (Gruppe 1) die Frequenz f1 und den Empfängern R3, R4 (Gruppe 2) die Frequenz f2 zugeordnet sein. Durch jeden der Empfänger R wird ein Sprach- und ein Squelchsignal v, sq z.B. in analoger Form an den zugehörigen Umsetzer CONV-R abgegeben. Das Squelchsignal ist normalerweise eine Gleichspannung mit einer der Qualität des Sprachsignals entsprechenden Grösse. In Abhängigkeit der Leistungsfähigkeit des Umsetzers CONV-R (Anzahl angeschlossener Empfänger pro Umsetzer CONV-R) ist der ISDN-Anschluss festgelegt. Falls nur ein Empfänger R angeschlossen ist, so werden die Daten in der nachfolgend beschriebenen Weise über eine U- oder S-Schnittstelle U/S-SS bzw. Basisanschluss an die Teilnehmervermittlungsanlage TVA übermittelt. Für eine höhere Leistungsfähigkeit wird ein Primärratenanschluss verwendet. Im Gegensatz zu dem in der EP 0 507 684 A1 offenbarten Kommunikationssystem, ist die Teilnehmervermittlungsanlage TVA im erfindungsgemässen System daher ein zentraler Bestandteil.

In der Zeichnung sind die Steuerbaugruppe SLMT und die Überwachungsschaltung SPMC als getrennte Module gezeigt. Selbstverständlich könnten diese beiden Module jedoch auch in einer einzigen Baugruppe integriert werden. Das erfindungsgemässe Verfahren sowie das Kommunikationssystem können ferner mit beliebigen handelsüblichen Teilnehmervermittlungsanlagen TVA realisiert werden.

Die von der Empfangseinheit R abgegebenen Sprach- und Squelchsignale v, sq werden im zugehörigen Umsetzer CONV-R digitalisiert und in zueinander entsprechende Sprach- Servicesignale aufgeteilt. Durch die Servicesignale wird in der vorliegenden Anwendung die jeweilige Qualität der Sprachsignale angezeigt. Die Erfindung ist jedoch auch vorteilhaft anwendbar, wenn die Servicesignale, anstatt für die Qualitätsanzeige, für andere Zwecke eingesetzt werden. Für die Qualitätsanzeige werden die Servicesignale zumindest in die Qualitätsstufen :
q-0 für kein Empfang
q-1 für Empfang mit niedriger Qualität und
q-2 für Empfang mit hoher Qualität
eingeteilt. Beim Auftreten von Qualitätsstufe q-0 werden Ruhesignale (PCM-idle) über die beiden B-Kanäle an die Teilnehmervermittlungsanlage TVA abgegeben. Dadurch kann die Teilnehmervermittlungsanlage TVA feststellen, ob die zu den Umsetzern CONV-R durchgeschalteten Verbindungsleitungen funktionsfähig sind. Beim Auftreten höherer Qualitätsstufen q-1, q-2 werden vom Umsetzer CONV-R digitalisierte Sprach- und Servicesignale je über einen B-Kanal an die Teilnehmervermittlungsanlage TVA abgegeben. Die Servicesignale bestehen dabei aus Bitmustern, die je einer entsprechenden Qualitätsstufe zugeordnet sind. Die Sprachsignale werden über die Durchschalteeinheit SWU direkt an eine mit einem Sonderendgerät DDB verbundene Steuerbaugruppe SLMT abgegeben. Die Servicesignale werden über die Durchschalteeinheit SWU und eine Steuerbaugruppe SLMT einer Überwachungsschaltung SPMC zugeführt, welche die über die beiden B-Kanäle zugeführten Daten auswertet, umsetzt und über eine Datenleitung, vorzugsweise einen zugehörigen D-Kanal an dieselbe oder direkt oder indirekt an eine weitere Steuerbaugruppe SLMT abgibt. Dadurch wird die Datenübertragung bis zu den Sonderperipheriemodulen SPMC und SLMT in standardisierter Weise vollzogen, so dass bis zu diesem Punkt bestehende Resourcen voll genutzt werden können. Erst in der Überwachungsschaltung SPMC erfolgt die Umsetzung vom B- in den D-Kanal, der zur Führung eines geringeren Datenstromes vorgesehen ist. Die dadurch entlastete Steuerbaugruppe SLMT ist daher in der Lage die mit ihr verbundenen B-Kanäle vollumfänglich für die Kommunikation zu nutzen. Durch die Signalisierung müssen der Steuerbaugruppe SLMT jedoch immer Informationen zugeführt werden, die es erlauben, den D-Kanal bzw. die Daten des D-Kanals und die zugehörigen B-Kanäle zu identifizieren. Beispielsweise könnten die Servicesignale in Datenblöcken über einen einzigen D-Kanal zur Steuerbaugruppe SLMT übertragen werden. Zur Identifikation müsste jeder dieser Datenblöcke mit einem Kennzeichen versehen sein, das der Steuerbaugruppe SLMT den zugehörigen B-Kanal anzeigt. Die Sprach- und Servicesignale werden, falls eine gegenseitige Abhängigkeit vorliegt, vorzugsweise immer gleichzeitig übertragen. Grundsätzlich ist Überwachungsschaltung SPMC auch durch vermittlungstechnische Bausteine derart erweiterbar, dass zumindest die Servicesignale über die Durchschalteeinheit SWU direkt der Überwachungsschaltung SPMC zuführbar und weiter vermittelbar sind.

In der Steuerbaugruppe SLMT oder auch erst in den Sonderendgeräten DDB erfolgt die anwendungsspezifische Verwendung der Sprach- und Servicesignale. Bei der Verkehrsüberwachung werden die Sprachsignale durch das Sonderendgerät DDB automatisch auf einen Lautsprecher geschaltet. Ein Funkgespräch eines Verkehrsteilnehmers wird daher nahezu verzögerungslos über den Umsetzer CONV-R, die Teilnehmervermittlungsanlage TVA, die Steuerbaugruppe SLMT und das Sonderendgerät DDB dem Verkehrsleiter zugeführt. Falls die Servicesignale Angaben über die Sprachqualität enthalten, so kann zwischen Sprachsignalen, die von mehreren Empfängern R eintreffen, die auf derselben Frequenz arbeiten, das Signal mit der besseren Sprachqualität ausgewählt werden. Die Auswahl kann vorzugsweise im Sonderendgerät DDB automatisch oder manuell vollzogen werden. Beispielsweise können die Werte auf der Anzeige des Sonderendgerätes DDB ausgegeben werden, so dass der Verkehrsleiter auf optischem Wege erkennen kann, welcher Empfänger R die qualitativ besten Signale abgibt und daher durchgeschaltet werden sollte. Auf dem Sonderendgerät DDB in Fig. 2 ist z.B. dargestellt, dass den Empfängern R1 und R2, die beide auf der Frequenz f1 z.B. die Signale des Verkehrsteilnehmers VT2 empfangen, unterschiedliche Qualitätsstufen zugeordnet sind. Der Verkehrsleiter kann daher durch Druck auf die dem Empfänger R2 zugeordnete Taste des Tastaturfeldes den Empfänger R2 auswählen, dem die höhere Sprachqualitätsstufe q-2 zugeordnet ist. Dieser Ablauf kann auch automatisiert sein.

Durch Tastendruck kann der Verkehrsleiter über die Steuerbaugruppe SLMT1 und die Teilnehmervermittlungsanlage TVA auch unverzüglich eine Verbindung zum Umsetzer CONV-T aufnehmen, der beim Eintreffen der über einen B-Kanal zugeführten Sprachsignale ein Aktivierungssignal ptt generiert und dieses zusammen mit dem Sprachsignal auf getrennten Leitungen der Sendeeinheit T1 zuführt. Nach Erhalt des Aktivierungssignals ptt schaltet die Sendeeinheit T1 auf volle Sendeleistung. Die Abgabe von Sprachsignalen wird beim Sonderendgerät DDB nach Verbindungsaufbau vorzugsweise durch Tastendruck freigegeben. Die zu diesem Zweck vorgesehene Taste (PTT) wird normalerweise an einem Telefonhörer oder direkt auf dem Tastenfeld des Endgerätes DDB vorgesehen. Über das Tastenfeld des Sonderendgerätes DDB lassen sich beliebige Verbindungen erstellen und zu Konferenzgesprächen zusammenschalten. Beispielsweise könnte eine Verbindung von einem externen Endgerät EG zum Verkehrsteilnehmer VT1 aufgebaut werden. Weiterhin kann vom Sonderendgerät DDB eine Verbindung zu einer fremden Teilnehmervermittlungsanlage TVAx aufgebaut werden, die an einem Verkehrsknotenpunkt eines anderen Landes vorgesehen ist und die in ein gleichartiges erfindungsgemässes Kommunikationssystem eingebaut ist. Via einen benachbarten Verkehrsknotenpunkt könnte ein Verkehrsleiter den Kontakt zu einem Verkehrsteilnehmer daher aufrechterhalten, der den Raum verlassen hat, der dem lokalen Funknetz RN zugeordnet ist.

Vorzugsweise werden die Verbindungen im erfindungsgemässen Kommunikationssystem unter Berücksichtigung festgelegter Prioritäten auf- und abgebaut. Dem in Fig. 2 dargestellten Endgerät EG könnte z. B. eine höhere Priorität zugeordnet sein als den Sende- und Empfangseinheiten R, T. Dadurch könnte sichergestellt werden, dass zur Übertragung wichtiger Informationen an den Verkehrsleiter, die Verbindung vom Endgerät EG zum Sonderendgerät DDB verzugslos durchgeschaltet wird. In der in den Steuerbaugruppe SLMT vorgesehenen Datenbank ist zu diesem Zweck eine Tabelle mit den festgelegten Prioritäten abgelegt. Dadurch ist die Steuerbaugruppe SLMT in der Lage, Verbindungen mit höherer Priorität selbsttätig immer durchzuschalten und bestehende Verbindungen mit niederer Priorität abzubauen, falls keine freien Leitungen mehr vorhanden sind.

In der in der Steuerbaugruppe SLMT vorhandenen Datenbank könnten ferner weitere Instruktionen vorhanden sein, die durch die von der Überwachungsschaltung SPMC eintreffenden Servicesignale aktiviert werden können.

## Patentansprüche

1. Verfahren zur Übertragung von Sprach- und Servicesignalen über eine entsprechend den ISDN-Normen arbeitende Teilnehmervermittlungsanlage (TVA) zu mindestens einem Sonderendgerät (DDB), **dadurch gekennzeichnet, dass** digitalisierte Sprach- und Servicesignale je über mindestens einen B-Kanal an die Teilnehmervermittlungsanlage (TVA) abgegeben werden, welche über eine Durchschalteeinheit (SWU) die Sprachsignale direkt und die Servicesignale über eine Überwachungsschaltung (SPMC) einer mit dem Sonderendgerät (DDB) verbundenen Steuerbaugruppe (SLMT) zuführt und dass die Servicesignale in der Überwachungsschaltung (SPMC) vom B-Kanal in einen zugehörigen D-Kanal umgesetzt und an die Steuerbaugruppe (SLMT) abgegeben werden.

2. Verfahren nach Anspruch 1 zur Übertragung von Funksignalen an das Sonderendgerät (DDB), **dadurch gekennzeichnet, dass** die Funksignale, die der Teilnehmervermittlungsanlage (TVA) über zumindest eine Empfangseinheit (R1, ..., Rm) zugeführt werden, in zueinander entsprechende Sprachund die Qualität der Sprachsignale anzeigende Servicesignale aufgeteilt und in einem Umsetzer (CONV-R) digitalisiert werden, dass die Servicesignale zumindest in die Qualitätsstufen :
q-0 für kein Empfang
q-1 für Empfang mit niedriger Qualität und
q-2 für Empfang mit hoher Qualität
eingeteilt werden, dass beim Auftreten von Qualitätsstufe q-0 Ruhesignale (PCM-idle) und beim Auftreten höherer Qualitätsstufen q-1, q-2 die digitalisierten Sprach- und Servicesignale je über einen B-Kanal an das Vermittlungssystem abgegeben werden.

3. Verfahren nach Anspruch 2, **dadurch gekennzeichnet, dass** die den Sprachsignalen zugehörigen Qualitätsstufen q1, q2, ... dem Bedienpersonal durch das Sonderendgerät (DDB) angezeigt werden, so dass das Bedienpersonal aus mehreren Sprachsignalen, die vom gleichen Absender stammen, dasjenige mit der höchsten Qualitätsstufe auswählen kann und/oder dass durch das Sonderendgerät (DDB) automatisch das Sprachsignal mit der höchsten Qualitätsstufe an elektro-akustische Wandler abgegeben wird, die mit dem Sonderendgerät (DDB) verbunden sind.

4. Verfahren nach Anspruch 1, 2 oder 3, **dadurch gekennzeichnet, dass** die Servicesignale über die Durchschalteeinheit (SWU) und die Steuerbaugruppe (SLMT1) in einem B-Kanal zur Überwachungsschaltung (SPMC) durchgeschaltet bzw. übertragen werden und dass die Servicesignale in der Überwachungsschaltung (SPMC) vom B-Kanal in einen zugehörigen D-Kanal umgesetzt und an dieselbe oder eine weitere Steuerbaugruppe (SLMT1, ..., SLMTn) abgegeben werden.

5. Digitales Kommunikationssystem, Zur Durchführung des Verfahrens nach Anspruch 1, das über Sende- und Empfangseinheiten (T1, ..., Tn; R1, ..., Rm) an zumindest ein Funknetz ankoppelbar ist, mit einer zur Durchschaltung von Verbindungen in einer Durchschalteeinheit (SWU), die über mindestens eine Steuerbaugruppe (SLMT) mit wenigstens einem Sonderendgerät (DDB) verbunden ist, welches zur Anwahl von Kommunikationsverbindungen dient, die durch die Steuerbaugruppe (SLMT) erstellt werden, **dadurch gekennzeichnet dass** die Empfangseinheiten (R1, ..., Rm) über einen Sprach- und einen Sprachqualitätskanal mit einem Umsetzer (CONV-R) verbunden sind, welcher über eine U-oder S-Schnittstelle (U/S-SS) und ISDN-fähige Verbindungen mit der Durchschalteeinheit (SWU) verbunden ist, dass ein Servicesignal, das der Sprachqualität entspricht, über einen ersten B-Kanal einer Überwachungsschaltung (SPMC) und umgesetzt von dieser im D-Kanal der Steuerbaugruppe (SLMT) zuführbar ist, welcher über mindestens einen zweiten B-Kanal zusätzlich die dem Servicesignal zugehörigen Sprachsignale zuführbar sind.

6. Kommunikationssystem nach Anspruch 5, **dadurch gekennzeichnet, dass** die Durchschalteeinheit (SWU) Bestandteil einer Teilnehmervermittlungsanlage (TVA) ist, in der die Steuerbaugruppe (SLMT) und die Überwachungsschaltung (SPMC) als Sonderperipheriemodule über Standardschnittstellen eingefügt sind.

7. Kommunikationssystem nach Anspruch 5 oder 6, **dadurch gekennzeichnet, dass** das Servicesignal über die Steuerbaugruppe (SLMT) dem Sonderendgerät (DDB) zuführbar und dort dem Bedienpersonal anzeigbar ist oder dass die Steuerbaugruppe (SLMT) und/oder das Sonderendgerät (DDB) zur automatischen Verarbeitung der eintreffenden Servicesignale geeignet sind.

8. Kommunikationssystem nach Anspruch 5, 6 oder 7, **dadurch gekennzeichnet, dass** der Umsetzer (CONV-R) zur Einteilung des der Sprachqualität entsprechenden Servicesignals zumindest in die Qualitätsstufen :
q-0 für kein Empfang
q-1 für Empfang mit niedriger Qualität und
q-2 für Empfang mit hoher Qualität
geeignet ist, dass der Umsetzer (CONV-R) beim Auftreten von Qualitätsstufe q-0 zur Abgabe von Ruhesignalen (PCM-idle) und beim Auftreten höherer Qualitätsstufen q-1, q-2 zur Abgabe digitalisierter Sprach- und Servicesignale über eine U- oder S-Schnittstelle (U/S-SS) in die B-Kanäle vorgesehen ist.

9. Kommunikationssystem nach einem der Ansprüche 5 bis 8, **dadurch gekennzeichnet, dass** die Durchschalteeinheit (SWU) über ISDN-fähige Verbindungen und eine U- oder S-Schnittstelle (U/S-SS) mit einem Umsetzer (CONV-T) und weiter über einen Sprach- und Steuerkanal mit den Sendeeinheiten (T1, ..., Tn) verbunden ist, dass der Umsetzer (CONV-T) zur Identifikation der über den für die Sprachsignale vorgesehenen B-Kanal übertragenen Ruhesignale (PCM-idle) geeignet ist und dass der Umsetzer (CONV-T) zur Bildung und Abgabe eines Steuersignals (ptt) an die Sendeeinheiten (T1, ..., Tn) vorgesehen ist, die abgegeben werden, sobald die Ruhesignale (PCM-idle) ausbleiben und/oder durch Sprachsignale ersetzt werden.

10. Kommunikationssystem nach einem der Ansprüche 5 bis 9, **dadurch gekennzeichnet, dass** die Teilnehmervermittlungsanlage (TVA) über Standlinien und/oder Kommunikationsnetze (ISDN; RN) mit weiteren Kommunikationssystemen und Endgeräten verbunden ist und dass die Teilnehmer der Funk- und der weiteren Kommunikationsnetze paarweise oder in Konferenzschaltungen innerhalb der einzelnen Netze oder netzübergreifend miteinander verbindbar sind.

11. Kommunikationssystem nach einem der Ansprüche 5 bis 10, **dadurch gekennzeichnet, dass** in der Steuerbaugruppe (SLMT) eine Datenbank mit Instruktionen abgelegt ist, die in Abhängigkeit der eintreffenden Servicesignale und/oder der anrufenden Teilnehmer bzw. der entsprechenden Signalisierungssignale abruf- und ausführbar sind.

## Claims

1. Method for transferring voice and service signals via a user exchange (TVA) operating in accordance with ISDN standards to at least one special terminal (DDB) **characterised in that** digitised voice and service signals are each transmitted via at least one B-channel to the user exchange (TVA), which routes the voice signals directly via a switching unit (SWU) and the service signals via a monitoring circuit (SPMC) to a control module (SLMT) connected to the special terminal (DDB) and that the service signals are transferred in the monitoring circuit (SPMC) from the B-channel to an appropriate D-channel and transmitted to the control module (SLMT).

2. Method according to Claim 1 for transferring radio signals to the special terminal (DDB), **characterised in that** the radio signals, which are routed to the user exchange (TVA) via at least one receiver unit (R1, ..., Rm), are divided into mutually corresponding voice signals and service signals indicating the quality of the voice signals and digitised in a converter (CONV-R), that the service signals are classified in the following quality levels as a minimum:
q-0 for no reception
q-1 for poor quality reception and
q-2 for good quality reception,
that in the event of quality level q-0 PCM-idle signals and in the event of higher quality levels q-1, q-2 digitised voice and service signals are each transmitted via a B-channel to the exchange system.

3. Method according to Claim 2, **characterised in that** the quality levels q1, q2, ... assigned to the voice signals are displayed to the operating personnel by the special terminal (DDB), so that the operating personnel can select the signal with the highest quality level from a number of voice signals originating from the same sender and/or that the voice signal with the highest quality level can be transmitted automatically by the special terminal (DDB) to electro-acoustic converters connected to the special terminal (DDB).

4. Method according to Claim 1, 2 or 3, **characterised in that** the service signals are switched through or transferred via the switching unit (SWU) and the control module (SLMT1) in a B-channel to the monitoring circuit (SPMC) and that the service signals are transposed in the monitoring circuit (SPMC) from the B-channel to an appropriate D-channel and transmitted to this or another control module (SLMT1, ..., SLMTn).

5. Digital communication system to implement the method according to Claim 1, which can be linked to at least one radio network via transmitter and receiver units (T1, ..., Tn; R1, ..., Rm), with a switching unit (SWU) for switching lines through, which is connected via at least one control module (SLMT) to at least one special terminal (DDB), which is used to select communication lines which are set up by the control module (SLMT), **characterised in that** the receiver units (R1, ..., Rm) are connected via a voice and voice quality channel to a converter (CONV-R), which is connected via a U or S interface (U/S-SS) and ISDN compatible lines to the switching unit (SWU), that a service signal corresponding to the voice quality can be routed via a first B-channel to a monitoring circuit (SPMC) and converted by this in the D-channel of the control module (SLMT), which can be routed via at least a second B-channel in addition to the voice signals assigned to the service signal.

6. Communication system according to Claim 5, **characterised in that** the switching unit (SWU) is a component of a user exchange (TVA), in which the control module (SLMT) and monitoring circuit (SPMC) are integrated as special peripheral modules via standard interfaces.

7. Communication system according to Claim 5 or 6, **characterised in that** the service signal can be routed to the special terminal (DDB) via the control module (SLMT) and can be displayed to operating personnel there or that the control module (SLMT) and/or the special terminal (DDB) are suitable for automatic processing of the incoming service signals.

8. Communication system according to Claim 5, 6 or 7, **characterised in that** the converter (CONV-R) is suitable for classifying the service signal corresponding to voice quality into the following quality levels as a minimum:
q-0 for no reception
q-1 for poor quality reception and
q-2 for good quality reception,
that in the event of quality level q-0 the converter (CONV-R) is provided to transmit PCM-idle signals and in the event of higher quality levels q-1, q-2 to transmit digitised voice and service signals to the B-channels via a U or S interface (U/S-SS).

9. Communication system according to one of Claims 5 to 8, **characterised in that** the switching unit (SWU) is connected via ISDN-compatible lines and a U or S interface (U/S-SS) to a converter (CONV-T) and also via a voice and control channel to the transmitter units (T1, ..., Tn), that the converter (CONV-T) is suitable for identifying the PCM-idle signals transferred via the B-channel provided for voice signals and that the converter (CONV-T) is provided to create and transmit a control signal (pit) to the transmitter units (T1, ..., Tn), which are transmitted as soon as the PCM-idle signals cease to appear and/or are replaced by voice signals.

10. Communication system according to one of Claims 5 to 9, **characterised in that** the user exchange (TVA) is connected via dedicated lines and/or communication networks (ISDN; RN) to other communication systems and terminals and that the users of the radio and other communication networks can be connected to each other in pairs or in conference circuits within the individual networks or across networks.

11. Communication system according to one of Claims 5 to 10, **characterised in that** a database with instructions is stored in the control module (SLMT), it being possible to retrieve and execute said instructions on the basis of the incoming service signals and/or the user making the call or the corresponding signalling signals.

## Revendications

1. Procédé de transmission de signaux vocaux et de service via une installation de communication d'abonnés fonctionnant suivant les normes ISDN à au moins un terminal particulier (DDB), **caractérisé en ce que** des signaux vocaux et de service numérisés sont envoyés sur au moins un canal B à l'installation de communication d'abonnés (TVA), laquelle achemine via une unité d'intercommunication (SWU) les signaux vocaux directement et les signaux de service via un circuit de surveillance (SPMC) à un module de commande relié au terminal particulier (DDB), et **en ce que** les signaux de service dans le circuit de surveillance (SPMC) sont déplacés du canal B à un canal D associé et sont envoyés au module de commande (SLMT).

2. Procédé selon la revendication 1 pour la transmission de signaux hertziens au terminal particulier (DDB), **caractérisé en ce que** le signaux hertziens qui sont acheminés à l'installation de communication d'abonnés (TVA) via au moins une unité de réception (R1, ..., Rm) sont divisés en signaux vocaux appropriés et en signaux de service indiquant la qualité de signaux vocaux et sont numérisés dans un convertisseur (CONV-R), **en ce que** les signaux de service sont classés au moins en niveaux de qualité :
q-0 pour aucune réception
q-1 pour une réception de faible qualité et
q-2 pour une réception de grande qualité,
**en ce qu'**il est envoyé par un canal B au système de communication des signaux de silence (PCM-idle) dans le cas d'un niveau de qualité q-0 et les signaux vocaux et de service numérisés dans cas de niveaux de qualité plus élevés q-1, q-2.

3. Procédé selon la revendication 2, **caractérisé en ce que** les niveaux de qualité q1, q2, ... etc. associés aux signaux vocaux sont indiqués au personnel de service par le terminal particulier (DDB) de sorte que le personnel de service peut choisir à partir de plusieurs signaux vocaux qui proviennent du même émetteur, celui qui a le niveau de qualité le plus élevé et/ou **en ce que** le signal vocal qui a le niveau de qualité le plus élevé est envoyé automatiquement via le terminal particulier (DDB) à des convertisseurs électroacoustiques qui sont reliés au terminal particulier (DDB).

4. Procédé selon la revendication 1, 2 ou 3, **caractérisé en ce que** les signaux de service sont transmis ou commutés via l'unité d'intercommunication (SWU) et le module de commande (SLMT1) dans un canal B vers le circuit de surveillance (SPMC), et **en ce que** les signaux de service dans le circuit de surveillance (SPMC) sont déplacés du canal B dans un canal D associé et sont envoyés au même module de commande (SLMT1, ..., SLMTn) ou à un autre.

5. Système de communication numérique destiné à la mise en oeuvre du procédé selon la revendication 1, qui peut être couplé via des unités d'émission et de réception (T1, ..., Tn ; R1, ..., Rm) à au moins un réseau hertzien, dont l'une est dédiée à la commutation de liaisons dans une unité d'intercommunication (SWU) qui est reliée via au moins un module de commande (SLMT) à au moins un terminal particulier (DDB) qui sert à établir sélectivement des liaisons de communication qui sont établies par le module de commande (SLMT), **caractérisé en ce que** les unités de réception (R1, ..., Rm) sont reliées via un canal vocal et un canal de qualité vocal à un convertisseur (CONV-R) qui est relié via une interface U ou S (U/S-SS) et des liaisons compatibles ISDN à l'unité d'intercommunication (SWU), **en ce qu'**un signal de service qui correspond à la qualité vocale peut être amené via un premier canal B à un circuit de surveillance (SPMC) et, après avoir été déplacé dudit canal B dans le canal D, au module de commande (SLMT) auquel les signaux vocaux associés au signal de service peuvent être acheminés en plus via au moins un second canal B.

6. Système de communication selon la revendication 5, **caractérisé en ce que** l'unité d'intercommunication (SWU) fait partie d'une installation de communication d'abonnés (TVA) dans laquelle sont insérés le module de commande (SLMT) et le circuit de surveillance (SPMC) sous la forme de modules périphériques particuliers via des interfaces standards.

7. Système de communication selon la revendication 5 ou 6, **caractérisé en ce que** le signal de service peut être amené via le module de commande (SLMT) au terminal (DDB) où il peut être présenté au personnel de service ou **en ce que** le module de commande (SLMT) et/ou le terminal particulier (DDB) sont appropriés pour traiter automatiquement les signaux de service entrants.

8. Système de communication selon la revendication 5, 6 ou 7, **caractérisé en ce que** le convertisseur (CONV-R) est approprié pour classer le signal de service correspondant à la qualité vocale au moins les nivaux de qualité :
q-0 pour aucune réception
q-1 pour une réception de faible qualité et
q-2 pour une réception de grande qualité,
**en ce qu'**il est prévu que le convertisseur (CONV-R) envoie dans le canal B via une interface U ou S (U/S-SS) des signaux de silence (PCM-idle) dans le cas d'un niveau de qualité q-0 et les signaux vocaux et de service numérisés dans cas de niveaux de qualité plus élevés q-1, q-2.

9. Système de communication selon l'une des revendications 5 à 8, **caractérisé en ce que** l'unité d'intercommunication (SWU) est reliée via des liaisons compatibles ISDN et une interface U ou S (U/S-SS) à un convertisseur (CONV-T) et en outre via un canal vocal et de commande à des unités d'émission (T1, ..., Tn), **en ce que** le convertisseur (CONV-T) est approprié à l'identification des signaux de silence (PCM-idle) transférés par le canal B destiné aux signaux vocaux, et **en ce que** le convertisseur (CONV-T) est destiné à former et envoyer un signal de commande (ptt) aux unités particulières (T1, ..., Tn) que les signaux de silence (PCM-idle) manquent ou sont remplacés par les signaux vocaux.

10. Système de communication selon l'une des revendications 5 à 9, **caractérisé en ce que** l'installation de communication d'abonnés (TVA) est reliée via des lignes de base et/ou des réseaux de communication (ISDN ; RN) à d'autres systèmes de communication, et **en ce que** les abonnés des réseaux hertziens ou autres sont reliés entre eux par paire ou en mode conférence à l'intérieur des réseaux individuels ou au sein de réseaux reliés entre eux.

11. Système de communication selon l'une des revendications 5 à 10, **caractérisé en ce qu'**il est placé dans le module de commande (SLMT) une banque de données comportant des instructions qui peuvent être appelées et exécutées en fonction des signaux de service entrant et/ou des abonnés qui appellent ou des signaux de signalisation correspondantes.
